Europäisches Patentamt

European Patent Office

Office européen des brevets

(11) Veröffentlichungsnummer: **0 511 566 A1**

# (12) EUROPÄISCHE PATENTANMELDUNG

(21) Anmeldenummer: **92106763.3**

(22) Anmeldetag: **21.04.92**

(51) Int. Cl.5: **C08G 18/40**, C08G 18/76, C08G 18/72, C08G 18/42, C08G 18/12, C09J 175/04, B32B 17/10

(30) Priorität: **01.05.91 DE 4114220**

(43) Veröffentlichungstag der Anmeldung: **04.11.92 Patentblatt 92/45**

(84) Benannte Vertragsstaaten: **DE FR GB IT**

(71) Anmelder: **BAYER AG**

**W-5090 Leverkusen 1 Bayerwerk(DE)**

(72) Erfinder: **Werner, Joachim, Dr.**
**Goethestrasse 63**
**W-4047 Dormagen(DE)**
Erfinder: **Meckel, Walter, Dr.**
**Zonser Strasse 9**
**W-4040 Neuss(DE)**
Erfinder: **Stepanski, Horst, Dr.**
**Rolandstrasse 22**
**W-5090 Leverkusen 3(DE)**
Erfinder: **Colinas-Martinez, José**
**Am Stumpf 19**
**W-5632 Wermelkirchen(DE)**

(54) **Durch Feuchtigkeit härtbare, NCO-reaktive Polyurethan-Schmelzklebstoff-Zusammensetzung.**

(57) Die vorliegende Erfindung betrifft eine durch Feuchtigkeit härtbare, NCO-reaktive Polyurethan-Schmelzklebstoff-Zusammensetzung, Verfahren zu ihrer Herstellung und ihre Verwendung als Klebstoff.

EP 0 511 566 A1

Rank Xerox (UK) Business Services

Die vorliegende Erfindung betrifft eine durch Feuchtigkeit härtbare , NCO-reaktive Polyurethan-Schmelzklebstoff-Zusammensetzung, Verfahren zu ihrer Herstellung und ihre Verwendung als Klebstoff.

Feuchtigkeitshärtende, einkomponentige, NCO-reaktive Polyurethan-Schmelzklebstoffe als Basis für Kleb- und Dichtstoffe sind bekannt. Nach dem Auftragen auf ein Substrat erreichen sie ihre Endfestigkeit und Wärmestandfestigkeit durch Nachreaktion der freien NCO-Gruppen mit Wasser aus der Atmosphäre.

Für viele Anwendungen ist ein rasches Abbinden der applizierten reaktiven Schmelzklebstoffe notwendig, um bei kurzen Taktzeiten eine sofortige Weiterverarbeitung zu ermöglichen. Bei diesen Anwendungen ist zudem wichtig, daß bei der Abbindung und Endaushärtung keine oder nur sehr geringe Volumenänderung auftritt, um das Auftreten von mechanischen Spannungen zu vermeiden. Diese dürfen auch in Anbetracht von Temperaturschwankungen nicht auftreten. Die zum Verkleben verwendeten Schmelzkleber müssen zudem hohe Wärmestandfestigkeiten aufweisen und dürfen bei längerer Wasserlagerung keine Unterwanderung des Wassers erlauben.

Eine verbesserte, also kürzere Abbindezeit kann mit Zusätzen von Harzen oder thermoplastischen Polymeren (EP-A 0 232 055, EP-A 0 107 097, EP-A 0 246 473) erreicht werden. Die nach der Vernetzung weiterhin vorhandenen hohen Anteile an thermoplastischen Harzen beeinflussen jedoch das Scherstandvermögen bei erhöhter Temperatur nachteilig.

Die Verwendung von Polyestern mit hohem Anteil an aromatischer Dicarbonsäure (EP-A 0 248 658) verbessert ebenfalls die Abbindegeschwindigkeit, führt aber zu Produkten mit hoher Schmelzviskosität (Verarbeitung erschwert) und, im ausgehärteten Zustand, zu geringer Flexibilität für viele Anwendungen. Letzteres gilt auch bei Verwendung schnell kristallisierender aliphatischer Polyester (DE-A 3 827 224). Die starke Kristallisationstendenz führt zu einer spürbaren Volumenänderung bei der Aushärtung, die bei Klebungen ein Abheben der Klebstoffschicht von der Unterlage bewirkt. Dies wiederum führt bei Lagerung der Klebverbunde in Wasser zu einer deutlichen Unterwanderung der Klebschicht.

Die starke Kristallisationstendenz bei Verwendung gut kristallisierender aliphatischer Polyester setzt auch voraus, daß die verwendeten Klebstoffe auf vorgewärmtem Substrat aufgetragen werden. Bei Auftrag auf nicht vorgewärmtem Substrat kommt es infolge spontaner Kristallisation an der Oberfläche zu einer "Hautbildung", die die Adhäsion deutlich verringert und das oben erwähnte Abheben von der Unterlage begünstigt. Ein auch auf nicht vorgewärmtem Substrat applizierbarer Klebstoff wäre offensichtlich eine deutliche Verfahrenserleichterung.

Bei der Verwendung von Schmelzklebstoffen in der Automobilfertigung zum Verkleben von Fenster- oder Scheinwerferstreuscheiben, also Glas-Kunststoff-Verbunden, sind schnelle Aushärtung (kurze Taktzeiten), geringer Schrumpf bei der Aushärtung und Resistenz gegen Wasserunterwanderung besonders gefragt. Es werden hohe Anforderungen an die Dichtigkeit der Klebefuge gegenüber Feuchtigkeit gestellt.

Aufgabe der vorliegenden Erfindung war es somit, feuchtigkeitsvernetzende Schmelzklebstoffe zu entwickeln, die nach kurzer Abbindezeit flexibel und spannungsfrei aushärten, dabei vorteilhaft unter Verwendung von nicht vorgewärmten Substraten geeignet sind und nach Aushärtung in hohem Maße gegenüber Unterwanderung durch Feuchtigkeit resistente Klebverbunde ergeben.

Es wurde nun gefunden, daß diese Aufgabe erfindungsgemäß gelöst werden kann mit einer durch Feuchtigkeit härtbaren, NCO-reaktiven Polyurethan-Schmelzklebstoff-Zusammensetzung, gekennzeichnet durch ein Umsetzungsprodukt, das erhältlich ist durch Umsetzung

A) eines Gemisches aus einer

a) bei Raumtemperatur (25°C) flüssigen oder hochviskosen (pastösen), mehrfunktionellen Polyolkomponente mit einem mittleren Molekulargewicht von 500 bis 5000 und bestehend aus mindestens einem Polyether und/oder Polyesterpolyol, und

b) einer bei Raumtemperatur (25°C) kristallinen, mehrfunktionellen Polyolkomponente mit einem Molekulargewicht von 500-10000, bevorzugt 2000-5000, mit

B) einem Gemisch aus einer Polyisocyanatkomponente mit zwei unterschiedlich reaktiven NCO-Gruppen und einer Diisocyanatkomponente mit einer NCO-Reaktivität gegenüber Hydroxygruppen, die größer ist als die der weniger reaktiven NCO-Gruppen der Polyisocyanatkomponente mit zwei unterschiedlich reaktiven NCO-Gruppen, wobei das Verhältnis von NCO/OH-Gruppen insgesamt größer als 1, vorzugsweise zwischen 2 und 1, besonders bevorzugt zwischen 1,8 und 1,2 und das Verhältnis der NCO-Gruppen der Polyisocyanatkomponente mit zwei unterschiedlich reaktiven NCO-Gruppen zu den OH-Gruppen der Polyolkomponente a) zwischen 1,05 und 2,0, bevorzugt zwischen 1,1 und 1,7 liegt und das Gewichtsverhältnis, gebildet aus der Einsatzmenge der Polyolkomponente a), vermehrt um die Einsatzmenge der Polyisocyanatkomponente mit zwei unterschiedlich reaktiven NCO-Gruppen und der Einsatzmenge der kristallinen Polyolkomponente b), vermehrt um die Einsatzmenge der Diisocyanatkomponente mit Isocyanatgruppen, die gegenüber OH-Gruppen reaktiver sind als die weniger reaktiven NCO-Gruppen des Isocyanats mit zwei unterschiedlich reaktiven NCO-Gruppen, zwischen 9 und 0,1, bevorzugt zwischen 4 und 1 liegt.

Als erfindungsgemäß einzusetzende bei Raumtemperatur (25°C) flüssige oder hochviskose (pastöse), mehrfunktionelle Polyolkomponenten seien bevorzugt Mischungen aus einem oder mehreren OH-funktionellen Polyether-Polyolen genannt, wobei die verwendeten Polyether-Polyole bevorzugt Molekulargewichte von 100 - 5000, besonders bevorzugt 100 - 2000, die gegebenenfalls hergestellten Mischungen solche von 500 - 5000, bevorzugt 500 - 2000 aufweisen. Die Polyether-Polyole können erhalten werden durch Ringöffnungspolymerisation von Propylenoxid und Ethylenoxid in Gegenwart von einer oder mehreren niedermolekularen Verbindungen mit aktivem Wasserstoff oder durch Ringöffnungspolymerisation von Tetrahydrofuran. Die aus Propylenoxid mit Diolen wie z.B. Ethylenglykol, Propylenglykol, 1,4-Butandiol, 1,5-Pentandiol, 1,6-Hexandiol oder Neopentylglykol erhaltenen erfindungsgemäß einzusetzenden Polyether-Polyole sind besonders bevorzugt.

Als erfindungsgemäß gegebenfalls einzusetzende bei Raumtemperatur (25°C) flüssige oder hochviskose (pastöse), mehrfunktionelle Polyolkomponenten seien ferner OH-funktionelle Polyester-Polyole mit einem Molekulargewicht von 500-5000, bevorzugt 1000-5000, besonders bevorzugt 2000-5000 genannt. Als erfindungsgemäß einzusetzende flüssige oder hochviskose (pastöse) Polyester sind solche bevorzugt, die durch Kondensation aus einer niedermolekularen aliphatischen Dicarbonsäure, z. B. Adipinsäure, und einem Gemisch der oben genannten Diole im Überschuß, vorzugsweise einem Gemisch enthaltend Neopentylglykol, erhalten werden können.

Als erfindungsgemäß einzusetzende, bei Raumtemperatur (25°C) kristalline, mehrfunktionelle Polyolkomponente seien OH-funktionelle Polyester-Polyole mit einer Molmasse von 500 bis 10000, bevorzugt 2000 bis 5000, genannt. Diese können erhalten werden durch Kondensation aus einer niedermolekularen aliphatischen Dicarbonsäure und einem der oben genannten Diole im Überschuß oder durch Polymerisation von Lectoren. Als erfindungsgemäß einzusetzende kristalline Polyester sind solche bevorzugt, die durch Kondensation aus Adipinsäure und einem der oben genannten Diole im Überschuß, besonders bevorzugt 1,4-Butandiol oder 1,6-Hexandiol, erhalten werden.

In DE-A 4 023 801 wird ein durch Feuchtigkeit härtender Heißschmelzkleber beansprucht, der anteilig ein thermoplastisches gesättigtes Polyesterpolyol mit einer Glasübergangstemperatur von mindestens 10°C aufweist. Ein solch glasartiger Estertyp ist nicht kennzeichnender Teil der vorliegenden Erfindung. Die in der genannten Anmeldung verwendeten segmentierten Prepolymere mit glasartigen Segmenten weisen hohe Viskositäten auf, was bei der Verarbeitung stört und die Benetzung der Substrate verschlechtert. Zur Einstellung geringerer Viskositäten sind höhere %NCO-Werte notwendig, was bei der Endaushärtung zu einer erniedrigten Schaumbeständigkeit führt.

Als erfindungsgemäß einzusetzende Polyisocyanatkomponente mit zwei unterschiedlich reaktiven NCO-Gruppen ist besonders das aromatische 2,4-Toluylendiisocyanat bevorzugt. Weiter geeignet sind aber auch unsymmetrisch substituierte Derivate des Diphenylmethandiisocyanats, aber auch das aliphatische Isophorondiisocyanat.

Von den erfindungsgemäß einzusetzenden Diisocyanaten, deren Isocyanatgruppen gegen-über OH-Gruppen reaktiver sind als die weniger reaktiven NCO-Gruppen des erfindungsgemäß einzusetzenden Polyisocyanats mit zwei unterschiedlich reaktiven NCO-Gruppen ist in erster Linie das aromatische 4,4'-Diphenylmethandiisocyanat geeignet, demgegenüber weniger geeignet ist das aliphatische 4,4'-Dicyclohexylmethandiisocyanat oder das Hexamethylendiisocyanat.

Die Umsetzung der Polyol- mit den Polyisocyanatkomponenten wird bevorzugt so durchgeführt, daß man

A) eine bei Raumtemperatur (25°C) flüssige oder hochviskose (pastöse) mehrfunktionelle Polyolkomponente mit der Polyisocyanatkomponente mit zwei unterschiedlich reaktiven NCO-Gruppen umsetzt, wobei das NCO/OH-Verhältnis zwischen 1,05 und 2,0, bevorzugt zwischen 1,1 und 1,7 liegt, und

B) eine bei Raumtemperatur kristalline, mehrfunktionelle Polyolkomponente mit einer Diisocyanatkomponente mit Isocyanatgruppen, die gegenüber OH-Gruppen reaktiver sind als die weniger reaktiven NCO-Gruppen des Isocyanats mit zwei unterschiedlich reaktiven NCO-Gruppen, umsetzt und die beiden Umsetzungsprodukte vermischt, wobei das Verhältnis von NCO/OH-Gruppen insgesamt größer als 1, vorzugsweise zwischen 2 und 1, besonders bevorzugt zwischen 1,8 und 1,2 liegt, oder so, daß man

A) eine bei Raumtemperatur (25°C) flüssige oder hochviskose (pastöse) mehrfunktionelle Polyolkomponente mit einer Polyisocyanatkomponente mit zwei unterschiedlich reaktiven NCO-Gruppen bis zum konstanten %NCO-Wert sowie eventuell anschließend nach LeA 27751 mit geringen Mengen Wasser und anschließend mit einer Diisocyanatkomponente mit einer NCO-Reaktivität gegenüber Hydroxygruppen, die größer ist als die der weniger reaktiven NCO-Gruppen der Polyisocyanatkomponente mit zwei unterschiedlich reaktiven NCO-Gruppen umsetzt und das Gemisch dann mit

B) einer bei Raumtemperatur (25°C) kristallinen mehrfunktionellen Polyolkomponente umsetzt, wobei das Verhältnis von NCO/OH-Gruppen insgesamt größer als 1, vorzugsweise zwischen 2 und 1, besonders bevorzugt zwischen 1,8 und 1,2 und das Verhältnis der NCO-Gruppen der Polyisocyanatkomponente mit zwei unterschiedlich reaktiven NCO- Gruppen zu den OH-Gruppen der Polyolkomponente a) zwischen 1,05 und 2,0, bevorzugt zwischen 1,1 und 1,7 liegt.

Bei der Schmelzklebstoffzusammensetzung der Erfindung ist das Gewichtsverhältnis zwischen der Gesamtmenge der erfindungsgemäß einzusetzenden flüssigen oder hochviskosen (pastösen) Polyolkomponente und der Isocyanatkomponente mit zwei unterschiedlich reaktiven NCO-Gruppen einerseits und der erfindungsgemäß einzusetzenden kristallinen Polyolkomponente und der Diisocyanatkomponente mit Isocyanatgruppen, die gegenüber OH-Gruppen reaktiver sind als die weniger reaktiven NCO-Gruppen des Isocyanats mit zwei unterschiedlich reaktiven NCO-Gruppen andererseits gemäß dem gewünschten Anforderungsprofil einstellbar und kann zwischen 10 und 0,1 liegen. Bevorzugt ist ein Gewichtsverhältnis zwischen 4 und 1.

Die Klebstoff-Zusammensetzung der Erfindung ist dadurch gekennzeichnet, daß sie ein Polyurethanprepolymer enthält, das durch eine der vorstehend beschriebenen Umsetzungen erhalten wird. Zusätzlich können geeignete weitere Komponenten wie Haftvermittler, Härtungskatalysatoren, Füllstoffe, Thixotropiermittel und Pigmente in geeigneten Mengen selektiv verwendet werden.

So hat es sich als besonders vorteilhaft erwiesen, als Haftvermittler für Glasoberflächen einen geringen Teil der NCO-Gruppen der erfindungsgemäßen Klebstoffzusammensetzung mit einem Additiv aus der Gruppe der NCO-reaktiven, hydroxy- oder aminofunktionellen Silane umzusetzen. Bevorzugt sind hier Produkte wie z.B. γ-Aminopropyltrimethoxysilan oder γ-Aminopropyltriethoxysilan, die in Mengen bis zu 2 Gew.-% eingesetzt werden können.

Die besondere Ausführungsform der Schmelzklebstoffzusammensetzung der Erfindung, die durch den oben erwähnten Zusatz von NCO-reaktiven Silanen entsteht, zeichnet sich durch ihre Beständigkeit gegenüber Feuchtigkeit und Wasser hinsichtlich Dichtigkeit der Klebfüge und Adhäsion aus. Dies war bei Verwendung einer an sich hydrolyseempfindlichen Polyesterkomponente in einer Schmelzklebstoffzusammensetzung nicht zu erwarten.

Weiterhin kann gezeigt werden, daß eine nicht erfindungsgemäße Zusammensetzung ohne Verwendung der erfindungsgemäß einzusetzenden flüssigen oder hochviskosen (pastösen) Polyolkomponente, also unter ausschließlicher Verwendung einer kristallinen Polyolkomponente, nach Applikation auf nicht vorgewärmtem Glas durch spontane Kristallisation und "Hautbildung" zu schlecht haftenden, infolge Volumenänderung sich spontan ablösenden Klebstoffraupen führt. Die erfindungsgemäße Klebstoffzusammensetzung zeichnet sich demgegenüber dadurch aus, daß sie auch bei Applikation auf nicht vorgewärmter Glasoberfläche gut haftende Klebstoffraupen ergibt, die Abbindung noch hinreichend schnell verläuft und der Klebstoffauftrag eine die Haftung zum Substrat begünstigende Flexibilität aufweist.

Weiter kann es vorteilhaft sein, zur Erreichung kurzer Endaushärtungszeiten einen geeigneten Härtungskatalysator, wie z. B. Dibutylzinndilaurat, in geringen Mengen (bis 2 %) zuzusetzen.

Als Füllstoffe geeignet sind gegenüber Isocyanaten inerte anorganische Verbindungen, z.B. Kreide oder Kalkmehl, gefällte und/oder pyrogene Kieselsäuren, Zeolithe, Bentonite, gemahlene Mineralstoffe, z.B. Talkumsorten, und andere, dem Fachmann geläufige anorganische Füllstoffe. Weiterhin können aber auch organische Füllstoffe wie z.B. Faserkurzschnitte o. ähnliches eingesetzt werden. Für spezielle Anwendungen, die eine standfeste Klebstoffraupe mit gutem "non-sag" voraussetzen, sind thixotropierende Füllstoffe wie pyrogene Kieselgele bevorzugt.

Beispiele:

Beispiel 1

In einem Reaktionsgefäß mit Rührer wurden 155,4 Gew.-Teile Polypropylenglykol (OH- Zahl 112) mit 44,7 Gew.-Teilen 2,4-Toluylendiisocyanat vermischt. Die Reaktionsmischung wurde auf 80°C erwärmt und bei dieser Temperatur bis zum konstanten NCO-Wert (theor. 4.2 % NCO) belassen. Das entstehende Prepolymer hatte bei 25 °C eine Viskosität von 60000, bei 50 °C von 5000 mPas. In einem zweiten Reaktionsgefäß wurden 176,4 Gew.-Teile eines aliphatischen kristallinen Adipinsäurepolyesters der OH-Zahl 28 mit 23,4 Gew.-Tlen. 4,4'-Diphenylmethandiisocyanat bei 80 °C bis zur Erreichung eines konstanten NCO-Wertes (theor. 2.1 % NCO) umgesetzt. Das entstehende Prepolymer hat bei 100 °C eine Viskosität von 21000 mPas. Die beiden Prepolymeren wurden im Ge- wichtsverhältnis 1:0,5 gemischt. Der Mischung wurden zunächst 2,5 Tle. γ-Aminopropyltrimethoxysilan (Dynasilan® AMMO) zugesetzt. Dann wurden 0,25 Tle. Dibutylzinndilaurat und schließlich 15,0 Tle. hydrophobierte pyrogene Kieselsäure (Aerosil® R 202) zugegeben.

Das entstehende hochviskose Gemisch wurde bei 80 °C in einer 3 mm starken Schicht auf vorgewärmte (80 °C) und kalte (RT) Glasplatten aufgetragen. Abhängig von der Tempera- tur des Substrates trat innerhalb von 4 (RT) oder 10 (80 °C) Min. Kristallisation unter Bildung einer klebfreien Oberfläche ein. Der Klebstoffauftrag wurde 7 Tage bei RT an Luft gelagert und anschließend einer Dauerlagerung in 60 °C heißem, entsalztem Wasser unterzogen. Unabhängig von der Temperatur der Glasplatten während des Auftrags war der Klebstoff auch nach 14 Tagen nur unter Kohäsionsbruch vom Glas zu lösen.

Beispiel 2

In einem Reaktionsgefäß mit Rührer wurden 155,4 Gew.-Teile Polypropylenglykol (OH-Zahl 112) mit 44,7 Gew.-Teilen 2,4-Toluylendiisocyanat vermischt. Die Reaktionsmischung wurde auf 80 °C erwärmt und bei dieser Temperatur bis zum konstanten NCO-Wert (theor. 4.2 % NCO) belassen. Das entstehende Prepolymer hatte bei 25 °C eine Viskosität von 60000, bei 50 °C von 5000 mPas. In einem zweiten Reaktionsgefäß wurden 176,4 Gew.-Teile eines aliphatischen kristallinen Adipinsäurepolyesters der OH-Zahl 28 mit 23,4 Gew.-Tlen. 4,4'-Diphenylmethandiisocyanat bei 80 °C bis zur Erreichung eines konstanten NCO-Wertes (theor. 2.1 % NCO) umgesetzt. Das entstehende Prepolymer hat bei 100 °C eine Viskosität von 21000 mPas. Die beiden Prepolymeren wurden im Gewichtsverhältnis 1:0,4 gemischt Der Mischung wurden zunächst 2,3 Tle. γ-Aminopropyltrimethoxysilan (Dynasilan® AMMO) zugesetzt. Dann wurden 0,25 Tle. Dibutylzinndilaurat und schließlich 8,4 Tle. pyrogene Kieselsäure (Aerosil® R 202) zugegeben.

Das entstehende hochviskose Gemisch wurde bei 80 °C in einer 3 mm starken Schicht auf vorgewärmte (80 °C) und kalte (RT) Glasplatten aufgetragen. Abhängig von der Temperatur des Substrates trat innerhalb von 4 (RT) oder 10 (80 °C) Min. Kristallisation unter Bildung einer klebfreien Oberfläche ein. Der Klebstoffauftrag wurde 7 Tage bei RT an Luft gelagert und anschließend einer Dauerlagerung in 60 °C heißem, entsalztem Wasser unterzogen. Unabhängig von der Temperatur der Glasplatten während des Auftrags war der Klebstoff auch nach 14 Tagen nur unter Kohäsionsbruch vom Glas zu lösen.

Beispiel 3 (nicht erfindungsgemäß)

400 Gew.-Tle. eines kristallinen Adipinsäurepolyesters mit der OH-Zahl 28 wurden in einem Reaktionsgefäß mit Rührer bei 80 °C zunächst mit 27,7 Gew.-Tlen. 2,4-Toluylendiisocyanat und anschließend mit 41,9 Gew.-Teilen 4,4'-Diphenylmethandiisocyanat umgesetzt, bis der NCO-Wert konstant war (3,7 % NCO). Dem entstandenen hochviskosen Prepolymer wurden zunächst 4,70 Gew.-Tle. γ-Aminopropyltrimethoxysilan (Dynasilan® AMMO), dann 0,47 Gew.-Tle. Dibutylzinndilaurat und schließlich 23,5 Gew.-Tle. pyrogene Kieselsäure (Aerosil® R 202) zugesetzt. Das entste- hende hochviskose Gemisch wurde wie in Beispiel 1 verarbeitet. Die auf kaltem Glas aufgetragene Klebstoffschicht hob sich nach der Kristallisation (ca. 3 Min.) spontan von der Unterlage ab. Bei Lagerung der anderen Probe in 60 °C heißem, entsalztem Wasser trat nach 48 h Verlust der Adhäsion auf.

Beispiel 4 (nicht erfindungsgemäß)

In einem Reaktionsgefäß mit Rührer wurden 257,2 Gew.-Teile Polypropylenglykol (OH-Zahl 112) mit 252,0 Gew.-Teilen 4,4'-Diphenylmethandiisocyanat vermischt. Die Reaktionsmischung wurde auf 80 °C erwärmt und bei dieser Temperatur bis zum konstanten NCO-Wert belassen. Anschließend wurden 430,8 Gew.-Tle. eines aliphatischen kristallinen Adipinsäurepolyesters der OH-Zahl 28 zugesetzt und das Gemisch bis zum konstanten NCO-Wert gerührt. Dem entstandenen hochviskosen Prepolymer wurden zunächst 9 Gew.-Tle. Dynasilan® AMMO, dann 1 Gew.-Tl. Dibutylzinndilaurat und schließlich 45 Gew.-Tle. Aerosil® R 202 zugesetzt. Das entstehende hochviskose Gemisch wurde wie in Beispiel 1 verarbeitet. Die auf kaltem Glas aufgetragene Klebstoffschicht hob sich nach der Kristallisation (ca. 4 Min.) spontan von der Unterlage ab. Bei Lagerng der anderen Probe in 60 °C heißem, entsalztem Wasser trat nach 48 h Verlust der Adhäsion auf.

**Patentansprüche**

1. Durch Feuchtigkeit härtbare, NCO-reaktive Polyurethan-Schmelzklebstoff-Zusammensetzung, gekennzeichnet durch ein Umsetzungsprodukt, das erhältlich ist durch Umsetzung

A) eines Gemisches aus einer

a) bei Raumtemperatur (25 °C) flüssigen oder hochviskosen (pastösen), mehrfunktionellen Polyolkomponente mit einem mittleren Molekulargewicht von 500 bis 5000 und bestehend aus mindestens einem Polyether und/oder Polyesterpolyol, und

b) einer bei Raumtemperatur (25 °C) kristallinen, mehrfunktionellen Polyolkomponente mit einem Molekulargewicht von 500-10000, bevorzugt 2000-5000, mit

B) einem Gemisch aus einer Polyisocyanatkomponente mit zwei unterschiedlich reaktiven NCO-Gruppen und einer Diisocyanatkomponente mit einer NCO-Reaktivität gegenüber Hydroxygruppen, die größer ist als die der weniger reaktiven NCO-Gruppen der Polyisocyanatkomponente mit zwei unterschiedlich reaktiven NCO-Gruppen,

wobei das Verhältnis von NCO/OH-Gruppen insgesamt größer als 1, vorzugsweise zwischen 2 und 1, besonders bevorzugt zwischen 1,8 und 1,2 und das Verhältnis der NCO-Gruppen der Polyisocyanatkomponente mit zwei unterschiedlich reaktiven NCO-Gruppen zu den OH-Gruppen der Polyolkomponente a) zwischen 1,05 und 2,0, bevorzugt zwischen 1,1 und 1,7 liegt und das Gewichtsverhältnis, gebildet aus der Einsatzmenge der Polyolkomponente a), vermehrt um die Einsatzmenge der Polyisocyanatkomponente mit zwei unterschiedlich reaktiven NCO-Gruppen und der Einsatzmenge der kristallinen Polyolkomponente b), vermehrt um die Einsatzmenge der Diisocyanatkomponente mit Isocyanatgruppen, die gegenüber OH-Gruppen reaktiver sind als die weniger reaktiven NCO-Gruppen des Isocyanats mit zwei unterschiedlich reaktiven NCO-Gruppen, zwischen 9 und 0,1, bevorzugt zwischen 4 und 1 liegt.

**2.** Zusammensetzung gemäß Anspruch 1, dadurch gekennzeichnet, daß als Polyisocyanatkomponente mit zwei unterschiedlich reaktiven NCO-Gruppen Toluylen-2,4-diisocyanat und als Diisocyanatkomponente mit Isocyanatgruppen, die gegenüber OH-Gruppen reaktiver sind als die weniger reaktiven NCO-Gruppen des Isocyanats mit zwei unterschiedlich reaktiven NCO-Gruppen, 4,4'-Diphenylmethandiisocyanat verwendet wird.

**3.** Zusammensetzung gemäß Ansprüchen 1 oder 2, dadurch gekennzeichnet, daß zusätzlich in einer Menge bis zu 2 Gew.-% ein Additiv aus der Gruppe der NCO-reaktiven Silane mit einem Teil der freien NCO-Gruppen umgesetzt worden ist.

**4.** Verfahren zur Herstellung einer durch Feuchtigkeit härtbaren, NCO-reaktiven Polyurethan-Schmelzklebstoff-Zusammensetzung gemäß einem der Ansprüche 1 oder 2, dadurch gekennzeichnet, daß man

A) eine bei Raumtemperatur (25 ° C) flüssige oder hochviskose (pastöse), mehrfunktionelle Polyolkomponente mit einer Polyisocyanatkomponente mit zwei unterschiedlich reaktiven NCO-Gruppen umsetzt, wobei das NCO/OH- Verhältnis zwischen 1,05 und 2,0, bevorzugt zwischen 1,1 und 1,7 liegt, und
B) eine bei Raumtemperatur kristalline, mehrfunktionelle Polyolkomponente mit einer Diisocyanatkomponente mit Isocyanatgruppen, die gegenüber OH-Gruppen reaktiver sind als die weniger reaktiven NCO-Gruppen des Isocyanats mit zwei unterschiedlich reaktiven NCO-Gruppen, umsetzt, und die beiden Umsetzungsprodukte vermischt, wobei das Verhältnis von NCO/OH-Gruppen insgesamt größer als 1, vorzugsweise zwischen 2 und 1, besonders bevorzugt zwischen 1,8 und 1,2 liegt.

**5.** Verfahren zur Herstellung einer durch Feuchtigkeit härtbaren, NCO-reaktiven Polyurethan-Schmelzklebstoff-Zusammensetzung gemäß einem der Ansprüche 1 oder 2, dadurch gekennzeichnet, daß man

A) eine bei Raumtemperatur (25 ° C) flüssige oder hochviskose (pastöse) mehrfunktionelle Polyolkomponente a) mit einer Polyisocyanatkomponente mit zwei unterschiedlich reaktiven NCO-Gruppen und anschließend mit einer einer Diisocyanatkomponente mit Isocyanatgruppen, die gegenüber OH-Gruppen reaktiver sind als die weniger reaktiven NCO-Gruppen des Isocyanats mit zwei unterschiedlich reaktiven NCO-Gruppen, umsetzt und das Gemisch dann mit
B) einer bei Raumtemperatur (25 ° C) kristallinen, mehrfunktionellen Polyolkomponente umsetzt, wobei das Verhältnis von NCO/OH-Gruppen insgesamt größer als 1, vorzugsweise zwischen 2 und 1, besonders bevorzugt zwischen 1,8 und 1,2 und das Verhältnis der NCO-Gruppen der Polyisocyanatkomponente mit zwei unterschiedlich reaktiven NCO-Gruppen zu den OH-Gruppen der Polyolkomponente a) zwischen 1,05 und 2,0, bevorzugt zwischen 1,1 und 1,7 liegt.

**6.** Verfahren gemäß einem der Ansprüche 4 oder 5, dadurch gekennzeichnet, daß man zusätzlich in einer Menge bis zu 2 Gew.-% ein Additiv aus der Gruppe NCO-reaktiven Silane mit einem Teil der freien NCO-Gruppen umsetzt.

**7.** Verwendung der NCO-reaktiven Polyurethan-Schmelzklebstoff-Zusammensetzungen gemäß einem der Ansprüche 1 bis 3 zusammen mit Feuchtigkeit und gegebenenfalls zusammen mit üblichen Zusatzstoffen wie Pigmenten, Füllstoffen, UV-Stabilisatoren, Härtungskatalysatoren und -beschleunigern zum Verkleben.

**8.** Verwendung der NCO-reaktiven Polyurethan-Schmelzklebstoff-Zusammensetzungen gemäß Anspruch 3 zusammen mit Feuchtigkeit und gegebenfalls zusammen mit üblichen Zusatzstoffen wie Pigmenten, Füllstoffen, UV-Stabilisatoren, Härtungskatalysatoren und -beschleunigem zum Verkleben von Glas und Glas-Kunststoffverbunden.

Europäisches
Patentamt

**EUROPÄISCHER RECHERCHENBERICHT**

Nummer der Anmeldung

EP    92 10 6763

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-0 150 444 (HENKEL)<br>* Ansprüche 1-5,7,9,10 *<br>* Seite 3, Zeile 12 - Zeile 19 *<br>* Beispiel 1 *<br>--- | 1 | C08G18/40<br>C08G18/76<br>C08G18/72<br>C08G18/42<br>C08G18/12<br>C09J175/04<br>B32B17/10 |
| A | EP-A-0 421 154 (BAYER)<br>* Ansprüche 1,4,9 *<br>--- | 1 | |
| A | EP-A-0 344 912 (MINNESOTA MINING)<br>* Ansprüche 1,2,6 *<br>* Seite 5, Zeile 2 - Zeile 5 *<br>----- | 1 | |

**RECHERCHIERTE SACHGEBIETE (Int. Cl.5 )**

C08G

Der vorliegende Recherchenbericht wurde für alle Patentansprüche erstellt

| Recherchenort | Abschlußdatum der Recherche | Prüfer |
|---|---|---|
| DEN HAAG | 13 JULI 1992 | VAN PUYMBROECK M. A. |